# EUROPEAN PATENT SPECIFICATION

(11) **EP 1 631 428 B1**
(45) Date of publication and mention of the grant of the patent: **03.01.2007**
(21) Application number: 04733852.0
(22) Date of filing: 19.05.2004
(51) Int. Cl.: B29C 44/10

(54) **MAKING FOAMED BODIES**
HERSTELLUNG VON GESCHÄUMTEN KÖRPERN
FABRICATION DE CORPS ALVEOLES

(30) Priority: 20.05.2003 GB 0311494
(43) Date of publication of application: 08.03.2006
(73) Proprietor: Stanelco RF Technologies Ltd., Marchwood, Southampton SO40 4BL (GB)
(72) Inventor: BALCHIN, Ian Henry, Cholsey Oxfordshire OX10 9PT (GB); FEAST, Michael Alan John, Eastleigh, Hampshire SO53 5RR (GB); GRIMES, Ryan, Southampton, Hampshire SO32 2BE (GB)
(74) Representative: Mansfield, Peter Turquand
(86) International application number: PCT/GB2004/002178
(87) International publication number: WO 2004/103687

(56) References cited:
- EP-A- 0 692 357
- WO-A-00/73037
- WO-A-02/14043

## Description

The present invention relates to a method and an apparatus for making foamed bodies, particularly but not exclusively those made with a biodegradable or watersoluble polymeric material.

In recent years considerable research has gone into the development of biologically degradable polymers, for example those based on starch. For example US 5 705 536 (Tomka) mentions that a starch foam can be produced by mixing powdered starch with water, and extruding the mixture while converting the water to steam. Tomka indicates that it would be advantageous to use thermoplastic starch, or polymer blends containing thermoplastic starch, in producing such foamed bodies; such starch contains typically less than 1% by weight of water, and Tomka teaches mixing it with a fibrous material such as ramie fibres containing moisture. The mixture can be converted into a foam by extrusion at about 200°C. The properties of the resulting product may be modified by adding, for example, plasticising agents and lubricants to the mixture. As explained in US 6 235 815B (Loercks et al) thermoplastic starch can be made from essentially anhydrous starch that is homogenised in an extrusion process with the addition of a plasticiser such as glycerol or sorbitol, and is melted within a temperature range between 120° and 220°C; thermoplastic starch may be combined with other biodegradable polymers such as polycaprolactone. Loercks et al teach that a polymer mixture can be made from anhydrous starch mixed directly with a hydrophobic polymer such as an aliphatic polyester, under dry conditions. And US 6 494 704B (Andersen et al) describe a mould press for making articles such as bowls or trays, the articles being formed between male and female mould halves, and being made from a starch-based composition that also contains water and may also contain fibres and inorganic fillers, the moulds being heated to between 170° and 220°C. The moulds may be of a metal such as steel or brass, and may be provided with a nonstick coating of PTFE. Some of the resulting water vapour is allowed to escape through a vent, while some causes foaming expansion of the material in the mould. After a time that is preferably in the range between 30 seconds and 2 minutes the mould halves can be separated, and the foamed bodies removed. It will be appreciated that a more rapid heating cycle would be beneficial.

EP-A-0 692 357 describes a process according to the preamble of claim 1 and an apparatus according to the preamble of claim 5.

The present invention provides a method of making a biodegradable foamed body according to claim 1.

The radio frequency supply may in principle be at a frequency between 1 MHz and 200 MHz, usually between 10 MHz and 100 MHz, but stringent limits are imposed on any emitted radio waves. In practice therefore the choice of frequency may be more limited. For example the supply frequency may be 27.12 MHz, or 40.68 MHz. This provides a much more rapid way of heating the polymer mixture, so that the heating, foaming and setting requires no more than 15 seconds, and preferably between 5 and 10 seconds.

The present invention also provides an apparatus for making a foamed body from a polymer mixture according to claim 5.

The electrically insulating material used to coat the moulding surfaces is preferably one that is not dielectrically heated, for example PFA (perfluoro alkoxyalkane). Silicone rubber is also suitable, providing good thermal and electrical installation. A surface coating of PTFE is also beneficial, as this makes removal of the body, once it has set, easier. The layer of electrically insulating material is preferably no more than 2 mm thick.

The polymer mixture contains water, which forms steam on heating; no other foaming agents are used. The polymer mixture is preferably a starch-based polymer, and may include thermoplastic starch. For good foaming it is important that the pressure becomes high in the die as the steam is generated, so the steam must not be freely vented.

The invention will now be further and more particularly described, by way of example only, and with reference to the accompanying drawings in which:
Figure 1 shows a cross-sectional view through the upper and lower halves of a mould, when separated;
Figure 2 shows a view corresponding to that of figure 1 during manufacture of a foamed body within the mould; and
Figure 3 shows a diagrammatic view of the electrical circuit of the apparatus that includes the mould.

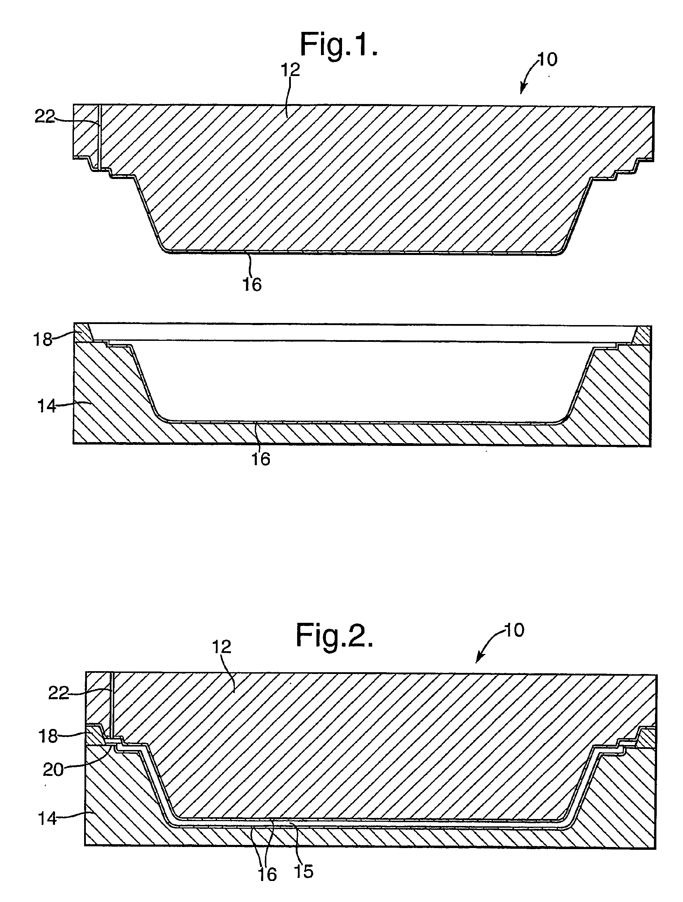

Referring to figures 1 and 2, an apparatus 10 for making trays of a foamed starch-based polymeric material includes upper and lower mould halves, 12 and 14 respectively, which mate together to leave a narrow cavity 15 between them in which the tray is to be formed. Each mould half 12 and 14 is of brass, and each has a coating 16 of PFA electrical insulator over the entire surface facing the cavity 15. With the two halves 12 and 14 separated as shown in figure 1, polymeric material is introduced into the lower half 14, and the upper half 12 is then lowered into position. A peripheral ridge 18 of electrically-insulating alumina on the lower half 14 has a sloping inner face, and contacts a correspondingly-shaped peripheral rim on the upper half 12 such that the cavity 15 is of uniform thickness 2.5 mm and the halves 12 and 14 of the mould are held accurately aligned. Radio frequency signals are then applied between the two halves 12 and 14, which act as electrodes. The alumina ridge 18 ensures that the radio-frequency signals are concentrated across the cavity 15. The polymeric material becomes hot, and water in the polymeric mixture boils, so that the material becomes a foam filling the entire cavity 15.

Immediately adjacent to the peripheral ridge 18, the upper mould half 12 defines a peripheral recess 20 which communicates through a narrow slot with the mould cavity 15. There are several narrow ducts 22 (only one of which is shown) extending through the upper mould half 12 from this peripheral recess 20. Steam from the hot polymeric mixture can escape into the peripheral recess 20, and hence escape through the narrow ducts 22, but the ducts 22 restrict the flow of the steam, so the pressure in the cavity 15 rapidly rises as the polymer foams up. For example it may rise to above 10 atmospheres. This corresponds to the steam and polymer mixture reaching a temperature above about 185°C. After about 8 seconds the polymeric mixture has formed a self-supporting tray, and the two halves are again separated, and the tray removed.

It will be appreciated that such an apparatus may be used to make a wide range of different products, by using appropriately-shaped moulds, and that the products may be of any desired shape. For example it may be used to make multi-compartment trays, circular or square plates or bowls, or cups, or a clam-shell container formed of two shells hinged together along a straight edge. It will also be appreciated that, although the apparatus has been shown as comprising only a single mould, there might instead be several moulds forming an array, all the moulds being connected to a common radio frequency supply.

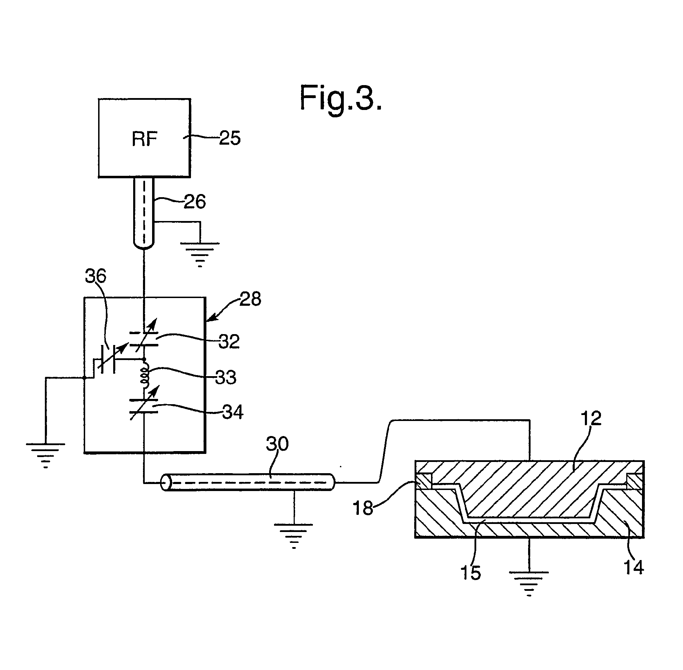

Referring now to figure 3, the electrical circuit is shown diagrammatically. A radio-frequency signal generator 25, which is a solid-state device, supplies the radio frequency signal via a coaxial cable 26 to a matching network 28, from which the signal is supplied via a coaxial cable 30 to the upper mould half 12, the lower mould half 14 being earthed. The matching network 28 is shown in more detail. The signal passes through a variable capacitor 32, an inductor 33, and a variable capacitor 34, and so to the cable 30. A monitoring circuit (not shown) monitors the radio frequency current and voltage, and adjusts the values of the variable capacitors 32 and 34 so that the impedance presented to the generator 25 remains at a constant value such as 50 ohms. The junction between the capacitor 32 and the inductor 34 is connected through a capacitor 36 to earth potential, and the effective capacitance of this capacitor 36 can be adjusted. This has the effect of finely adjusting the radio frequency voltage applied between the live electrode (the upper mould half 12) and the opposed, earthed electrode (the lower mould half 14), and the RF current supplied. It thus controls the power that is actually supplied between the mould halves 12 and 14.

The nature of the polymer is not critical to the present invention, although the polymer must be biodegradable, and is preferably at least partly starch-based. The polymer may include thermoplastic starch, but because this may not contain significant quantities of water it is necessary to include another ingredient that provides the requisite water in order to form the foam. A benefit of using thermoplastic starch is that the resulting foamed body, although biodegradable, does not readily dissolve in water. Alternatively the polymer may comprise starch granules at least partly gelatinised by reacting with water. The mixture may contain salt (e.g. NaCl), to alter its electrical conductivity, and may also contain a plasticiser such as sorbitol. The polymeric mixture may contain other polymeric materials, and may also contain reinforcing fibres, such as cellulose organic fibres such as those from hemp or cotton or other plants. Although the fibres strengthen the resulting foamed products, the concentration of fibres preferably does not exceed about 50%, and is preferably no more than 25% of the total weight. It will also be appreciated that the polymeric mixture may be introduced into the mould in the form of a film, granules, pellets, a preform or a pasty mixture, and may be of a wet appearance.

For example, foamed starch trays have been made by mixing cornstarch (cornflour) and water in equal quantities by mass. This mixture was then introduced into a mould as described above, but with the cavity 15 being of thickness 2 mm and of diameter 110 mm. When radio-frequency energy was applied, the starch mixture foamed up to produce a foam tray filling the cavity. The volume increase is greater than three times.

It will be appreciated that the apparatus may be modified in various ways, for example the thickness of the coating 16 of electrical insulator may be between 20 and 50 µm. And as mentioned above, the mould shape will depend upon the shape of the desired product. When making a product that includes a hinge (such as a clam-shell container), the hinge may be provided by a strip of a polymeric non-foaming material (for example a strip of hydroxypropylmethylcellulose) placed in the mould along with the mixture of which forms the foam, so that the hinge strip becomes integral with the foam parts on each side of the hinge.

## Claims

1. A method of making a biodegradable foamed body, in which a polymer mixture comprising a biodegradable polymer and water is introduced into a mould (10), the mould being defined between moulding surfaces of two opposed parts (12,14) that mate together, wherein the polymer mixture contains no foaming agents apart from water, each mould part is of electrically conducting material and each of the moulding surfaces is coated with a layer (16) of an electrically insulating material, and wherein radio-frequency signals at a frequency between 1 MHz and 200 MHz are applied between the mould parts so that the polymer mixture is heated by dielectric heating, such that the water turns to steam, causing the polymer mixture to form a foam, fill the mould and set in no more than 15 s, **characterised by** the mould restricting the flow of steam such that the pressure in the mould rises to above 10 atmospheres during the foaming process.

2. A method as claimed in claim 1 wherein the radio-frequency signals are applied such that the polymer mixture forms a foam, fills the mould and sets in less than 10 s.

3. A method as claimed in claim 1 or claim 2 wherein the radio-frequency signals are applied at a frequency between 20 MHz and 50 MHz.

4. A method as claimed in claim 3 wherein the polymer mixture is at least in part starch-based.

5. An apparatus for making a foamed body from a polymer mixture that contains no foaming agents apart from water, the apparatus including a mould (10) defined between moulding surfaces of two opposed parts (12, 14) that mate together, wherein each mould part is of electrically conducting material and is coated with a layer (16) of an electrically insulating material, and means (25-36) to apply radio-frequency signals between the mould parts so that polymer mixture between the mould parts is heated by dielectric heating, **characterised by** the mould being such as to restrict the flow of steam such that the pressure in the mould rises to above 10 atmospheres during the foaming process.

6. An apparatus as claimed in claim 5 wherein the electrically insulating material used to coat the moulding surfaces is one that is not dielectrically heated.

7. An apparatus as claimed in claim 5 or claim 6 wherein, when the mould parts are together, they are held apart by an electrical insulator that is thicker than the gap defining the mould.

## Patentansprüche

1. Verfahren zur Herstellung eines biologisch abbaubaren geschäumten Körpers, bei dem ein Polymergemisch, das ein biologisch abbaubares Polymer und Wasser aufweist, in eine Form eingebracht wird, wobei die form zwischen Formungsflächen von zwei einander gegenüberliegenden, ineinander passenden Teilen (12, 14) festgelegt ist, wobei das Polymergemisch kein Schäumungsmittel außer Wasser enthält, jedes Formteil aus elektrisch leitendem Material besteht und jede der Formungsoberflächen mit einer Schicht (16) eines elektrisch isolierenden Materials überzogen ist, und wobei Hochfrequenzsignale mit einer Frequenz zwischen 1 MHz und 200 MHz zwischen den Formteilen angelegt werden, so daß das Polymergemisch durch die elektrische Erwärmung aufgeheizt wird, derart, daß das Wasser sich in Dampf verwandelt, wobei es das Polymergemisch dazu bringt, einen Schaum zu bilden, die Form zu füllen und in nicht mehr als 15 s auszuhärten, **dadurch gekennzeichnet, daß** die Form die Strömung von Dampf behindert, derart, daß der Druck in der Form während des Schäumungsprozesses auf über 10 Atmosphären ansteigt.

2. Verfahren nach Anspruch 1, bei dem die Hochfrequenzsignale so angelegt werden, daß das Polymergemisch einen Schaum bildet, die Form füllt und in weniger als 10 s aushärtet.

3. Verfahren nach Anspruch 1 oder 2, bei dem die Hochfrequenzsignale mit einer Frequenz zwischen 20 MHz und 50 MHz angelegt werden.

4. Verfahren nach Anspruch 3, bei dem das Polymergemisch zumindest teilweise auf Stärke basiert.

5. Vorrichtung zur Herstellung eines geschäumten Körpers aus einem Polymergemisch, das kein Schäumungsmittel außer Wasser enthält, wobei die Vorrichtung eine Form (10) enthält, die zwischen Formungsoberflächen von zwei einander gegenüberliegenden Teilen (12, 14) festgelegt ist, die ineinander passen, wobei jedes Formteil aus elektrisch leitendem Material besteht und mit einer Schicht (16) aus einem elektrisch isolierenden Material überzogen ist und Mittel (25-36) vorgesehen sind, um Hochfrequenzsignale zwischen den Formteilen anzulegen, so daß das Polymergemisch zwischen den Formteilen durch dielektrische Erwärmung aufgeheizt wird, **dadurch gekennzeichnet, daß** die Form so ausgebildet ist, daß sie die Strömung von Dampf behindert, derart, daß der Druck in der Form während des Schäumungsprozesses auf über 10 Atmosphären ansteigt.

6. Vorrichtung nach Anspruch 5, bei der das elektrisch isolierende Material, das zum Beschichten der Formoberflächen verwendet wird, ein solches ist, das dielektrisch nicht aufgeheizt wird.

7. Vorrichtung nach Anspruch 5 oder 6, bei der die zusammengesetzten Formteile durch einen elektrischen Isolator voneinander getrennt gehalten sind, der dicker ist als der die Form festlegende Spalt.

## Revendications

1. Procédé de fabrication d'un corps alvéolé biodégradable, dans lequel un mélange de polymères comprenant un polymère biodégradable et de l'eau est introduit à l'intérieur d'un moule (10), le moule étant défini entre les surfaces de moulage de deux parties opposées (12, 14) qui se couplent l'une à l'autre, dans lequel le mélange de polymères ne contient aucun agent moussant en dehors de l'eau, chaque partie du moule étant faite d'un matériau électriquement conducteur et chacune des surfaces de moulage étant enduite d'une couche (16) d'un matériau électriquement isolant, et dans lequel des signaux radioélectriques à une fréquence allant de 1 MHz à 200 MHz sont appliqués entre les parties du moule de sorte que le mélange de polymères est chauffé par un chauffage diélectrique, de sorte que l'eau se transforme en vapeur, amenant le mélange de polymères à former une mousse, remplir le moule et durcir en pas plus de 15 s, **caractérisé en ce que** le moule limite le débit de vapeur de sorte que la pression dans le moule monte au-dessus de 10 atmosphères pendant le procédé de moussage.

2. Procédé selon la revendication 1 dans lequel les signaux radioélectriques sont appliqués de sorte que le mélange de polymères forme une mousse, remplit le moule et durci en moins de 10 s.

3. Procédé selon la revendication 1 ou la revendication 2 dans lequel les signaux radioélectriques sont appliqués à une fréquence allant de 20 MHz à 50 MHz.

4. Procédé selon la revendication 3 dans lequel le mélange de polymères est au moins en partie à base d'amidon.

5. Appareil pour la fabrication d'un corps alvéolé à partir d'un mélange de polymères qui ne contient aucun agent moussant en dehors de l'eau, l'appareil comprenant un moule (10) défini entre les surfaces de moulage composées de deux parties opposées (12, 14) qui se couplent l'une à l'autre, dans lequel chaque partie du moule est faite d'un matériau électriquement conducteur et est enduite d'une couche (16) d'un matériau électriquement isolant, et de moyens (25 à 36) pour appliquer des signaux radioélectriques entre les parties du moule de sorte que le mélange de polymères entre les parties du moule est chauffé par un chauffage diélectrique, **caractérisé en ce que** le moule est tel qu'il limite le débit de vapeur de sorte que la pression dans le moule monte au-dessus de 10 atmosphères pendant le procédé de moussage.

6. Appareil selon la revendication 5 dans lequel le matériau électriquement isolant utilisé pour enduire les surfaces de moulage est un matériau qui n'est pas chauffé de manière diélectrique.

7. Appareil selon la revendication 5 ou la revendication 6 dans lequel, lorsque les parties du moule sont ensembles, elles sont tenues écartées par un isolant électrique qui est plus épais que l'espace définissant le moule.
